# EUROPEAN PATENT APPLICATION

(11) **EP 3 893 138 A1**
(43) Date of publication of application: **13.10.2021**
(21) Application number: 20807645.5
(22) Date of filing: 17.11.2020
(51) Int. Cl.: G06F 21/60, G06Q 20/14, G06Q 20/40, G06Q 20/38, G06Q 20/34, H04L 9/08

(54) **PAYMENT APPARATUS AND METHOD FOR CONTROLLING PAYMENT APPARATUS**

(30) Priority: 12.02.2020 KR 20200016956; 12.02.2020 KR 20200016957
(71) Applicant: Paycoq Co., Ltd., Gangnam-gu, Seoul 06172 (KR)
(72) Inventor: KWON, Hae Won, Namyangju-si, Gyeonggi-do 12002 (KP)
(74) Representative: Petraz, Gilberto Luigi
(86) International application number: PCT/KR2020/016145
(87) International publication number: WO 2021/162208

(57) **Abstract**

Disclosed are a payment apparatus and a method of controlling the same. With this, it is possible to receive payment information based on Table Pay; analyze a payment card image included in the payment information, and divide the payment card image into a first region comprising sensitive data that needs security and a second region comprising general data other than the sensitive data; differently set the plurality of encryption units corresponding to the first region and the second region so that the first region and the second region can be differentially subjected to encryption; and divide the payment card image into a plurality of encryption units, and perform the encryption with regard to the plurality of encryption units independently of each other.

## Description

### [TECHNICAL FIELD]

The disclosure relates to a payment apparatus and a method of controlling the same, and more particularly to a payment apparatus, in which sensitive information that may be generated during a payment process of Table Pay is strengthened in security and prevented from leakage, and a method of controlling the same.

### [BACKGROUND ART]

With development of financial technology (FinTech), a payment method or medium is improving variously. Recently, Table Pay has been introduced into many shops because of minimum wage increase or the like effect. When the shop accepts the Table Pay, customers do not have to wait in line for payment and at the same time a table turnover rate may increase.

The Table Pay refers to a service that allows a customer to pay at a table. Specifically, a customer takes a seat, scans a quick response (QR) code attached to the table with his/her own mobile terminal, and accesses an Internet page to thereby place an order and make payment. Alternatively, a customer inputs an order through a payment terminal placed on a table, and inputs credit card information by allowing the payment terminal to recognize his/her own credit card through a camera, optical character recognition (OCR), near field communication (NFC) or the like method, thereby making payment.

However, various problems related to security of information may arise in such a payment process based on the Table Pay.

A credit card image or card information recognized by the payment terminal is transmitted to a payment mediation server, a value-added network (VAN) company server, etc., and this process involves a risk that the information may be intercepted or hacked.

Further, the payment terminal used in the Table Pay is implemented by a point of sale (POS), a kiosk, an industrial device, etc. In this case, the payment terminal is vulnerable to malicious code infection and hacking and has low hardware performance, and it is therefore difficult to apply a security solution used in general personal computer (PC) environments to the payment terminal.

In addition, the credit card information is security-sensitive information. However, data of the credit card information is automatically generated and stored in the payment terminal while the credit card information is processed. Accordingly, there are a risk and an anxiety that a malicious third party may hack or intercept the data of the credit card information.

### [TECHNICAL PROBLEM]

An aspect of the disclosure is to provide a payment apparatus, which is able to effectively encrypt security-sensitive information processed and transmitted in a table payment process, and a method of controlling the payment apparatus.

Further, an aspect of the disclosure is to provide a payment apparatus, which is able to strengthen security of data automatically generated and stored in a payment terminal while processing card information and thus decrease a risk of hacking or intercepting the data sensitive to the security, and a method of controlling the payment apparatus.

The technical problems to be solved in the disclosure are not limited to the foregoing technical problems, and other unmentioned technical problems are also clearly understood by a person having ordinary knowledge in the art to which the embodiments proposed by the following description pertain.

### [TECHNICAL SOLUTION]

According to an embodiment of the disclosure, a payment apparatus includes: an input unit configured to receive payment information based on Table Pay; an analyzer configured to analyze a payment card image included in the payment information, and divide the payment card image into a first region comprising sensitive data that needs security and a second region comprising general data other than the sensitive data; an encryptor configured to divide the payment card image into a plurality of encryption units, and performs encryption with regard to the plurality of encryption units independently of each other; and a controller configured to differently set the plurality of encryption units corresponding to the first region and the second region so that the first region and the second region can be differentially subjected to the encryption.

In the payment apparatus, the plurality of encryption units may include a first encryption unit corresponding to the first region and a second encryption unit corresponding to the second region, and the controller may set the first encryption unit and the second encryption unit to be different in at least one of size and number from each other.

In the payment apparatus, the controller sets the size of the first encryption unit to be smaller than the size of the second encryption unit.

In the payment apparatus, the controller sets the number of first encryption units to be greater than the number of second encryption units.

In the payment apparatus, the analyzer may analyze the payment information and divide the payment information into first text data corresponding to the sensitive data and second text data corresponding to the general data when the payment information does not include the payment card image, the encryptor divide the payment information into the plurality of encryption units, and perform encryption with regard to the plurality of encryption units independently of each other, and the controller may differently set the plurality of encryption units corresponding to the first text data and the second text data so that the first text data and the second text data can be differentially subjected to the encryption.

In the payment apparatus, the controller may be configured to generate a plurality of pieces of dummy data, which has a same pattern as a pattern of the first text data but is different from the first text data, based on the first text data; and store the plurality of pieces of dummy data in a memory area assigned to store intermediate data generated by software or a platform while the first text data is processed.

In the payment apparatus, the controller may be configured to randomly store the intermediate data and the plurality of pieces of dummy data not to match each other.

In the payment apparatus, the intermediate data may include data intactly stored as unchanged while being stored in the memory area.

In the payment apparatus, the controller may be configured to drive the software or the platform to process the first text data, and delete the intermediate data stored in the memory area when the software or the platform is terminated.

According to another embodiment of the disclosure, a method of controlling a payment apparatus includes: receiving payment information based on Table Pay; analyzing a payment card image included in the payment information, and dividing the payment card image into a first region including sensitive data that needs security and a second region including general data other than the sensitive data; differently setting the plurality of encryption units corresponding to the first region and the second region so that the first region and the second region can be differentially subjected to encryption; and dividing the payment card image into a plurality of encryption units, and performing the encryption with regard to the plurality of encryption units independently of each other.

In the method of controlling the payment apparatus, the plurality of encryption units may include a first encryption unit corresponding to the first region and a second encryption unit corresponding to the second region, and the method may include setting the first encryption unit and the second encryption unit to be different in at least one of size and number from each other.

In the method of controlling the payment apparatus, the size of the first encryption unit may be set to be smaller than the size of the second encryption unit.

In the method of controlling the payment apparatus, the number of first encryption units may be set to be greater than the number of second encryption units.

In the method of controlling the payment apparatus, the method may further include: analyzing the payment information and dividing the payment information into first text data corresponding to the sensitive data and second text data corresponding to the general data when the payment information does not include the payment card image, dividing payment information into the plurality of encryption units, and performing encryption with regard to the plurality of encryption units independently of each other, and differently setting the plurality of encryption units corresponding to the first text data and the second text data so that the first text data and the second text data can be differentially subjected to the encryption.

In the method of controlling the payment apparatus, the method may further include: generating a plurality of pieces of dummy data, which has a same pattern as a pattern of the first text data but is different from the first text data, based on the first text data; and storing the plurality of pieces of dummy data in a memory area assigned to store intermediate data generated by software or a platform while the first text data is processed.

In the method of controlling the payment apparatus, the intermediate data and the plurality of pieces of dummy data may be randomly stored not to match each other.

In the method of controlling the payment apparatus, the intermediate data may include data intactly stored as unchanged while being stored in the memory area.

In the method of controlling the payment apparatus, the method may further include: driving the software or the platform to process the first text data, and deleting the intermediate data stored in the memory area when the software or the platform is terminated.

According to still another embodiment of the disclosure, there is provided a computer-readable recording medium recorded with a program for carrying out a method of controlling a payment apparatus, the method including: receiving payment information based on Table Pay; analyzing a payment card image included in the payment information, and dividing the payment card image into a first region including sensitive data that needs security and a second region including general data other than the sensitive data; and dividing the payment card image into a plurality of encryption units, and performing encryption with regard to the plurality of encryption units independently of each other, wherein the plurality of encryption units are differently set corresponding to the first region and the second region so that the first region and the second region can be differentially subjected to the encryption.

### [ADVANTAGEOUS EFFECTS]

According to embodiments of the disclosure, security-sensitive information processed and transmitted in a table payment process is effectively encrypted.

Further, according to embodiments of the disclosure, security of data automatically generated and stored in a payment terminal while card information is processed is strengthened, thereby decreasing a risk of hacking or intercepting the data sensitive to the security.

### [DESCRIPTION OF DRAWINGS]

FIG. 1 is a view for explaining a general payment method based on Table Pay.
FIG. 2 is a block diagram of a payment apparatus according to the disclosure.
FIG. 3 is a view for explaining an example that a payment apparatus according to the disclosure analyzes a payment card image.
FIG. 4 is a view for explaining an example that a payment apparatus according to the disclosure encrypts a payment card image.
FIG. 5 is a view for explaining an example that a payment apparatus according to the disclosure encrypts payment information.
FIGS. 6A and 6B are views for describing that general software processes data.
FIGS. 7A and 7B are views for describing a plurality of pieces of dummy data generated by a payment apparatus according to the disclosure.
FIG. 8 is a view showing a control process of a payment apparatus according to the disclosure.
FIG. 9 is a view showing a computing apparatus according to an embodiment of the disclosure.

### [MODE FOR INVENTION]

Below, embodiments of the disclosure will be described in detail with reference to the accompanying drawings. However, technical concept of the disclosure is not limited to the embodiments set forth herein, and retrogressive embodiments or other embodiments may be easily proposed within the scope of the technical concept of the disclosure by adding, changing, removing, etc. another element.

Terms used in the disclosure are selected among the terms generally and widely used in the art if possible. However, there may be terms discretionarily chosen by the applicant in special cases, and in this case the meaning thereof will be explained in the detailed description. Therefore, the disclosure should be grasped based on not the term itself but the meaning of the term. In the following description, term 'include' does not exclude presence of elements or operations other than those listed above.

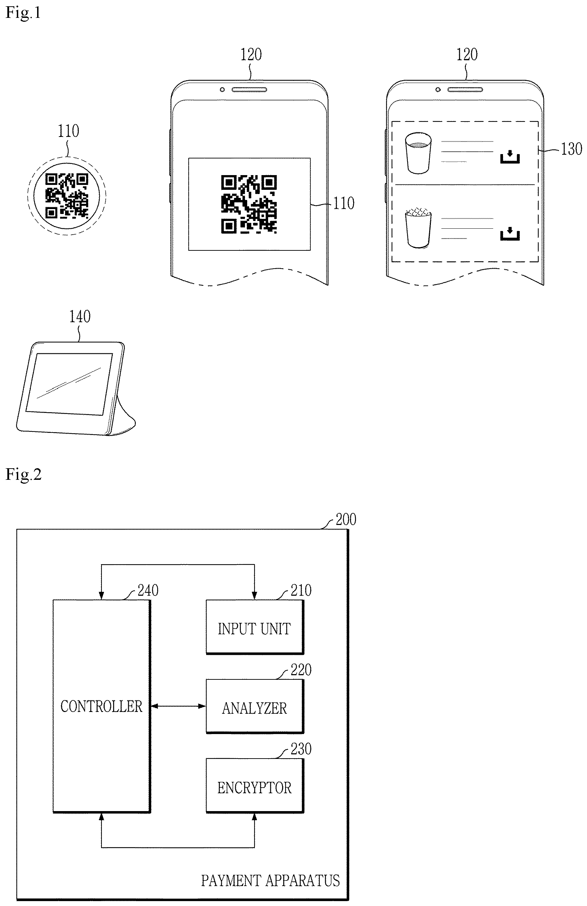

FIG. 1 is a view for explaining a general payment method based on Table Pay.

The Table Pay refers to a service that allows a customer to pay at a table. In this case, the Table Pay may be carried out by a quick response (QR) code 110 attached to the table or a payment terminal 140 placed on the table.

When the QR code 110 is used to perform the Table Pay, a customer takes a seat and scans the QR code 110 attached to the table with his/her own mobile terminal 120. The mobile terminal 120 calls an order point-of-sale (POS) 130 registered to the QR code 110 and given as the Web, and a customer places an order and makes payment through the connected order POS 130.

When the payment terminal 140 is used to perform the Table Pay, a customer places an order by selecting goods and a menu through the payment terminal 140 placed on the table. The customer inputs credit card information by allowing the payment terminal 140 to recognize his/her own credit card through a camera, optical character recognition (OCR), near field communication (NFC) or the like method, thereby making payment. To this end, the payment terminal 140 may include a scanning camera or an NFC reader.

FIG. 2 is a block diagram of a payment apparatus according to the disclosure.

A payment apparatus 200 according to the disclosure refers to an apparatus that makes payment based on various payment methods such as OCR, NFC, QR code scanning, etc., and may be embodied by various electronic apparatuses such as a mobile terminal, a tablet terminal, a personal computer (PC), a laptop computer, etc. According to an embodiment, the payment apparatus 200 may be embodied by a POS, a kiosk, etc. provided in a shop, or may be embodied by a payment mediation server or the like that mediates a payment process between a seller which sells goods and a value-added network (VAN) company server which approves the payment.

The payment apparatus 200 according to the disclosure may include an input unit 210, an analyzer 220, an encryptor 230 and a controller 240.

The input unit 210 may receive payment information of the Table Pay. To this end, the input unit 210 may capture or scan an image of a credit card by a built-in camera, extract the payment information from the scanned image by the OCR, or receive the payment information directly input by a customer.

The analyzer 220 may analyze a payment card image included in the payment information, and divide the payment card image into a first region including sensitive data that needs security and a second region including general data other than the sensitive data.

Here, the payment card image refers to an image obtained by capturing or photographing a payment card, and may include a card number, an expiration date, a card validation code (CVC) number, an owner's name, and the like data. The payment card may include a credit card and a check card, and may further include any card as long as it can be used for payment. The data may include a character, a number, a line, a figure, an image, a margin, etc. In this case, the analyzer 220 may recognize data included in the payment card image by various image processing methods such as OCR, image recognition, edge detection, pattern recognition, etc.

When the payment information does not include the payment card image, the analyzer 220 may analyze payment information and divide the payment information into first text data corresponding to sensitive data and second text data corresponding to general data.

The encryptor 230 may divide the payment card image into a plurality of encryption units, and subject the plurality of encryption units to encryption independently of one another. Specifically, the plurality of encryption units may include a first encryption unit corresponding to the first region and a second encryption unit corresponding to the second region.

Further, the encryptor 230 may divide the payment information into the plurality of encryption units, and subject the plurality of encryption units to encryption independently of one another.

The controller 240 may set the plurality of encryption units differently corresponding to the first region and the second region so that the first region and the second region can be subjected to differential encryption.

Specifically, the controller 240 may set a first encryption unit and a second encryption unit to be different in at least one of size and number.

According to an embodiment, the controller 240 may set the size of first encryption unit to be smaller than the size of second encryption unit.

According to another embodiment, the controller 240 may set the number of first encryption units to be greater than the number of second encryption units.

Thus, a region including the sensitive data that requires security is divided into smaller pieces, and a region including the general data may be divided into larger pieces.

Further, the controller 240 may set the plurality of encryption units differently corresponding to the first text data and the second text data so that the first text data and the second text data can be subjected to differential encryption.

The controller 240 may generate a plurality of pieces of dummy data having the same pattern as the pattern of the first text data but different from the first text data, based on the first text data. In this case, the controller 240 may store the plurality of pieces of dummy data in a memory area assigned to store intermediate data. Here, the intermediate data is defined as data generated by software or a platform and automatically stored while the first text data is processed.

According to an embodiment, the intermediate data may be data intactly stored without changed while being stored in the memory area. In this case, the controller 240 may delete the intermediate data from the memory area when a program is terminated. For example, when a Java program is driven to process a card number, the intermediate data may be generated by an object for storing a series of program characters. Here, the series of characters is a subject to store a plurality of characters. The series of characters in the Java program is a string type.

The controller 240 may store the intermediate data and the plurality of pieces of dummy data randomly without matching each other.

According to embodiments, time to generate the dummy data may be varied. The controller 240 may generate the plurality of pieces of dummy data before the intermediate data is generated, or generate the plurality of pieces of dummy data after the intermediate data is generated.

The controller 240 may drive the software or the platform to process the first text data, and delete the intermediate data stored in the memory area when the software or the platform is terminated.

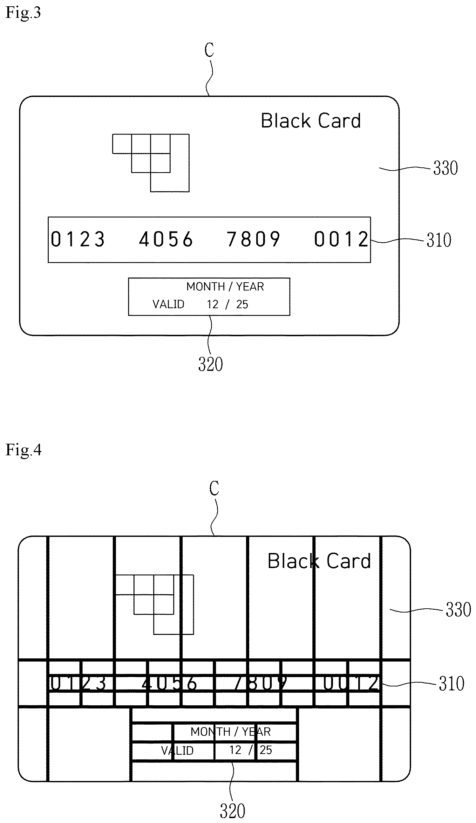

FIG. 3 is a view for explaining an example that a payment apparatus according to the disclosure analyzes a payment card image.

The payment apparatus 200 may divide a payment card image C into first regions 310 and 320 including sensitive data that needs security, and a second region 330 including general data other than the sensitive data.

The sensitive data includes private information that causes a user to be seriously damaged when it is leaked. The general data refers to information that does not matter whether it is leaked or not, in other words, all pieces of information but the sensitive data. In FIG. 3, a card number, an expiration date and the like may be classified into the sensitive data. On the other hand, a card name, a background pattern and the like may be classified into the general data. In this case, the first regions 310 and 320 including the sensitive data should be transmitted as they are encrypted.

FIG. 4 is a view for explaining an example that a payment apparatus according to the disclosure encrypts a payment card image.

When the payment card image is divided into the plurality of encryption units, the payment apparatus 200 may differentially set the encryption units based on importance of data. For example, a background image may be divided into fewer encryption units with larger areas, but a card number image may be divided into more encryption units with smaller areas.

Referring to FIG. 4, a payment card image C is divided into the first regions 310 and 320 including the card number and the expiration date, and the second region 330 including the other general data. In this case, the area and the number of first encryption units corresponding to the first regions 310 and 320 are respectively smaller and greater than those of the second encryption units corresponding to the second region 330. In other words, the first regions 310 and 320 are encrypted as divided into smaller pieces than those of the second region 330.

Thus, a third party must decrypt all the plurality of encrypted regions corresponding to the first regions 310 and 320 in order to get the card number and the expiration date by stealing the encrypted information. Further, although a third party decrypts one of the plurality of encryption regions, it is impossible to completely get the card number or the expiration date of the payment card unless all the other encryption regions are decrypted. Therefore, such an encryption method strengthens security of sensitive data in payment information.

Meanwhile, according to an embodiment, the payment apparatus 200 may apply different encryption keys or different encryption levels to the first region and the second region. Further, the payment apparatus 200 may make difference in applying the encryption to the first region and the second region. For example, only the first region may be subjected to the encryption.

The payment card image has unique features distinctive from a general image. In other words, the payment card image includes both data such as a card number, an expiration date and the like that is sensitive to leakage and thus needs security, and general data such as a name of a credit card company, a background image and the like. Further, the payment card image is basically transmitted to make a request for payment approval, and therefore only the payment information such as the card number, the expiration date, etc. are needed in a lot of data involved in the payment card image and the other pieces of information are not needed. Nevertheless, the encryption has conventionally been applied without considering the features of the payment card image.

According to the disclosure, the payment apparatus 200 performs the encryption based on the features of the payment card image, and transmits the encrypted payment card image to the payment mediation server or the VAN company server. Thus, the payment card image is economically encrypted and transmitted, thereby minimizing costs caused by load in a processing or a network, time taken in the transmission, etc.

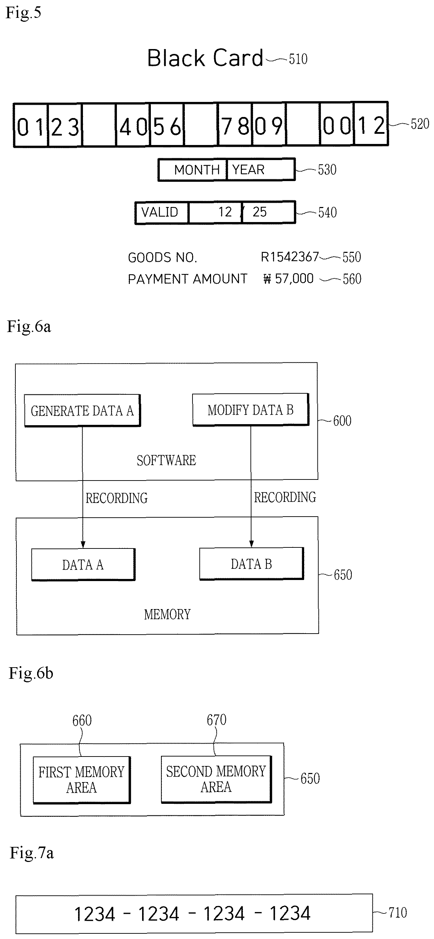

FIG. 5 is a view for explaining an example that a payment apparatus according to the disclosure encrypts payment information.

The payment apparatus 200 performs encryption by dividing payment information into a plurality of encryption units, and may differentially set a unit for dividing data and the number of frames based on importance of the data.

For example, the encryption unit may be set to assign a large data bit and decrease the number of data frames with regard to the name of credit card company, the amount of payment, etc., and the encryption unit may be set to assign a small data bit and increase the number of data frames with regard to the card number or the expiration date.

Referring to FIG. 5, the payment information is divided into first text data 520, 530 and 540 including the card number and the expiration date, and second text data 510, 550 and 560 including the other general data.

In this case, a first encryption unit corresponding to the first text data 520, 530 and 540 is set to have a smaller data bit and more data frames than those of a second encryption unit corresponding to the second text data 510, 550 and 560. In other words, the first text data 520, 530 and 540 is encrypted as divided to have a smaller data bit and more data frames than those of the second text data 510, 550 and 560.

FIGS. 6A and 6B are views for describing that general software processes data.

Specifically, FIG. 6A shows a case where software records data in a memory. When the payment apparatus 200 executes the software (or program) to process the payment information, the software may perform various kinds of jobs to process the data. When data is created or modified while the software is running, the corresponding data is essentially recorded in the memory. Therefore, the data created or modified during the operation of the software is all recorded in the memory.

Referring to FIG. 6A, software 600 generates data A, and records the generated data A in a memory 650. Further, the software 600 modifies data B and records the modified data B in the memory 650.

FIG. 6B illustrates the structure of the memory 650. The memory 650 is configured to store the data. In this case, the memory 650 may include a first memory area 660 and a second memory area 670.

The first memory area 660 refers to a memory area configured to store basic-type data. The basic-type data may be defined as final data used at a user level. The basic-type data may be accessible at the user level. Therefore, a user may store, modify or delete the basic-type data. When the basic-type data is deleted, the basic-type data stored in the first memory area 660 is deleted. Further, a user may set the basic-type data not to be stored. When the basic-type data is set not to be stored, the payment apparatus 200 may not store the basic-type data in the first memory area 660.

The second memory area 670 refers to a memory area configured to store the reference-type data. The reference-type data may be defined as an intermediate-type data used at a software or platform level. The software may automatically generate the reference-type data in a process for drawing the final data, and store the reference-type data in the second memory area 670. The reference-type data is hardly accessed at a general user level, but is accessible by a programmer or a manager having professional knowledge. In the process of processing the payment information according to the disclosure, the intermediate data generated by the software or the platform is equivalent to such reference-type data.

The reference-type data stored in the second memory area 670 may be data unchangeable while being stored in the memory. In this case, when the reference-type data is generated and stored in the second memory area 670, the stored reference-type data is not changed or deleted until the software or the program is terminated. In other words, once the reference-type data is stored in the memory, it is possible to change or delete the reference-type data only after the software or the program is terminated.

The intermediate data automatically generated while the payment apparatus 200 processes the payment information and recorded in the memory includes data sensitive to security. However, the intermediate data is retained and stored in the memory until the program is terminated, thereby causing an information-security problem of hacking or interception.

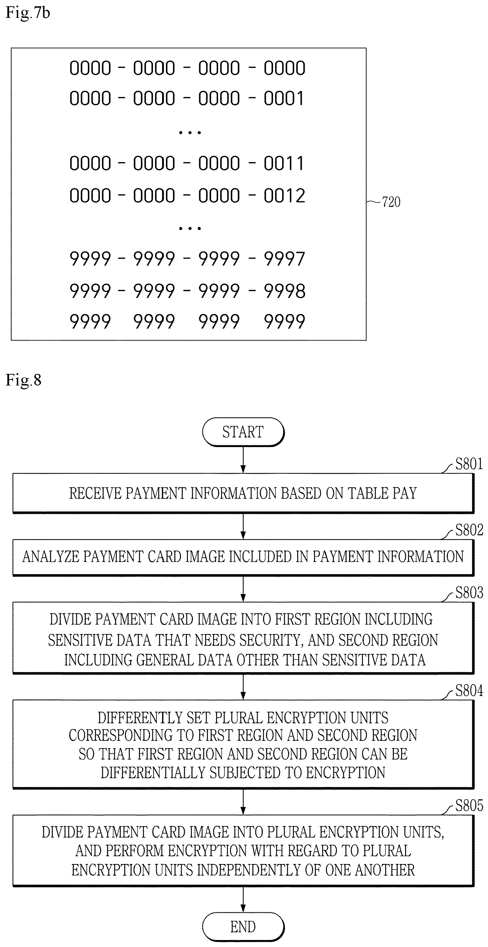

FIGS. 7A and 7B are views for describing plurality of pieces of dummy data generated by a payment apparatus according to the disclosure.

The payment apparatus 200 may generate the plurality of pieces of dummy data, which has the same pattern as the pattern of the first text data but is different from the first text data, based on the first text data.

In this case, the payment apparatus 200 may store the plurality of pieces of dummy data in the memory area assigned to store the intermediate data. Here, the intermediate data may be data generated by the software or the program while the first text data is being processed.

Specifically, FIG. 7A illustrates an example of a card number 710. The payment apparatus 200 may analyze the card number 710, thereby analyzing a type, a pattern, etc. of the card number. For example, there may be a digit number, a number pattern, etc. of the card number. Referring to FIG. 7A, the card number 710 is provided as a 16-digit number, and divided into four groups of four numerals.

FIG. 7B illustrates a plurality of pieces of dummy data 720 stored in the memory area. The payment apparatus 200 generates the plurality of pieces of dummy data 720 based on the card number 710. The plurality of pieces of dummy data 720 are provided as a 16-digit number and divided into four groups of four numerals like the pattern of the card number 710. Further, the plurality of pieces of dummy data 720 is configured differently from the card number 710.

The plurality of pieces of dummy data 720 is stored in the memory area assigned to store the intermediate data. Therefore, it is impossible to distinguish between the dummy data 720 and the intermediate data automatically generated and stored while the card number 710 is processed, even though the memory area is scanned. Therefore, it is possible to strengthen the security of the security-sensitive card number.

Data generated during operation of software may be automatically stored in the memory. When the generated data is sensitive to security, a manager may directly access the memory to delete the data, or perform management by putting the data on a tracking management list whenever the data is generated. However, in this case, not only it is inconvenient to manage data generated in real time, but also it is not easy for a general user who has no professional knowledge to carry out such management.

According to this embodiment, when the card information sensitive to the security is processed, the dummy data of the same pattern is also generated and stored together in the memory, and it is therefore impossible to distinguish between the intermediate data generated during the process of the card information and the dummy data even though the memory is scanned. Accordingly, the security of the intermediate data generated during the payment process of the Table Pay is improved, and the security or reliability of the card payment is guaranteed.

FIG. 8 is a view showing a control process of a payment apparatus according to the disclosure.

Payment information based on the Table Pay is received (S801).

A payment card image included in the payment information is analyzed (S802).

The payment card image is divided into a first region including sensitive data that needs security, and a second region including general data other than the sensitive data (S803).

A plurality of encryption units are differently set corresponding to the first region and the second region so that the first region and the second region can be differentially subjected to encryption (S804).

Here, the plurality of encryption units may include a first encryption unit corresponding to the first region, and a second encryption unit corresponding to the second region.

In this case, the payment apparatus 200 may set the first encryption unit and the second encryption unit to be different in at least one of size and number. According to an embodiment, the payment apparatus 200 may set the size of the first encryption unit to be smaller than the size of second encryption unit. According to an alternative embodiment, the payment apparatus 200 may set the number of first encryption units to be greater than the number of second encryption units.

The payment card image is divided into a plurality of encryption units, and the plurality of encryption units are subjected to the encryption independently of one another (S805).

Meanwhile, when the payment information does not include the payment card image, the payment apparatus 200 may analyze payment information and divide the payment information into first text data corresponding to sensitive data and second text data corresponding to general data. In this case, the payment apparatus 200 may differently set the plurality of encryption units corresponding to the first text data and the second text data so that the first text data and the second text data can be differentially subjected to the encryption. Then, the payment apparatus 200 divides the payment information into the plurality of encryption units, and applies the encryption to the plurality of encryption units independently of one another.

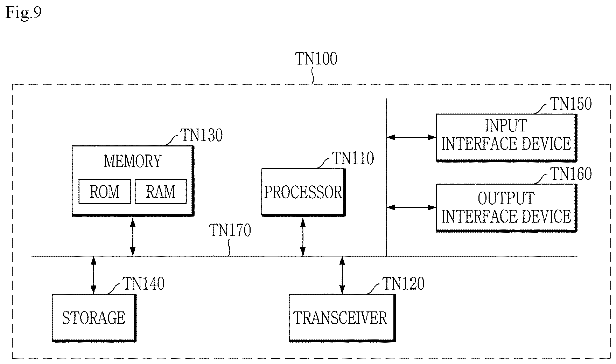

FIG. 9 is a view showing a computing apparatus according to an embodiment of the disclosure.

A computing apparatus TN100 of FIG. 9 may be the payment apparatus 200 disclosed in this specification. In the embodiment of FIG. 9, the computing apparatus TN100 may include at least one processor TN110, a transceiver TN120, and a memory TN130. Further, the computing apparatus TN100 may include a storage TN140, an input interface device TN150, an output interface device TN160, etc. The elements included in the computing apparatus TN100 may be connected by a bus TN170 and communicate with each other.

The processor TN110 may execute a program command stored in at least one of the memory TN130 and the storage TN140. The processor TN110 may refer to a central processing unit (CPU), a graphics processing unit (GPU), or a processor dedicated for performing the methods according to an embodiment of the disclosure. The processor TN110 may be configured to realize procedures, functions, methods, etc. described in relation to an embodiment of the disclosure. The processor TN110 is able to control the elements of the computing apparatus TN100.

The memory TN130 and the storage TN140 are configured to store various pieces of information related to the operations of the processor TN110. Each of the memory TN130 and the storage TN140 may be embodied by at least one of a volatile storage medium and a nonvolatile storage medium. For example, the memory TN130 may be embodied by at least one of a read only memory (ROM) and a random access memory (RAM).

The transceiver TN120 may transmit or receive a wired signal or a wireless signal. The transceiver TN120 may be connected to a network and perform communication.

Meanwhile, an embodiment of the disclosure may be realized by not only the foregoing apparatus and/or method that have so far described, but also a program for implementing the functions corresponding to the elements according the embodiment of the disclosure or a recording medium in which the program is recorded, and the realization is easily achieved by those skilled in the art to which the disclosure pertains, from the description of the foregoing embodiment.

Although a few embodiments of the disclosure have been described in detail, it will be appreciated by those skilled in the art that various changes and modifications can be also made without departing from the fundamental concept of the disclosure defined in the appended claims.

## Claims

1. A payment apparatus comprising:
an input unit configured to receive payment information based on Table Pay;
an analyzer configured to analyze a payment card image included in the payment information, and divide the payment card image into a first region comprising sensitive data that needs security and a second region comprising general data other than the sensitive data;
an encryptor configured to divide the payment card image into a plurality of encryption units, and performs encryption with regard to the plurality of encryption units independently of each other; and
a controller configured to differently set the plurality of encryption units corresponding to the first region and the second region so that the first region and the second region can be differentially subjected to the encryption.

2. The payment apparatus according to claim 1, wherein
the plurality of encryption units comprises a first encryption unit corresponding to the first region and a second encryption unit corresponding to the second region, and
the controller sets the first encryption unit and the second encryption unit to be different in at least one of size and number from each other.

3. The payment apparatus according to claim 2, wherein the controller sets the size of the first encryption unit to be smaller than the size of the second encryption unit.

4. The payment apparatus according to claim 2, wherein the controller sets the number of first encryption units to be greater than the number of second encryption units.

5. The payment apparatus according to claim 1, wherein
the analyzer analyzes the payment information and divides the payment information into first text data corresponding to the sensitive data and second text data corresponding to the general data when the payment information does not include the payment card image,
the encryptor divides the payment information into the plurality of encryption units, and performs encryption with regard to the plurality of encryption units independently of each other, and
the controller differently sets the plurality of encryption units corresponding to the first text data and the second text data so that the first text data and the second text data can be differentially subjected to the encryption.

6. The payment apparatus according to claim 5, wherein the controller is configured to:
generate a plurality of pieces of dummy data, which has a same pattern as a pattern of the first text data but is different from the first text data, based on the first text data; and
store the plurality of pieces of dummy data in a memory area assigned to store intermediate data generated by software or a platform while the first text data is processed.

7. The payment apparatus according to claim 6, wherein the controller is configured to randomly store the intermediate data and the plurality of pieces of dummy data not to match each other.

8. The payment apparatus according to claim 6, wherein the intermediate data comprises data intactly stored as unchanged while being stored in the memory area.

9. The payment apparatus according to claim 6, wherein the controller is configured to drive the software or the platform to process the first text data, and delete the intermediate data stored in the memory area when the software or the platform is terminated.

10. A method of controlling a payment apparatus, the method comprising:
receiving payment information based on Table Pay;
analyzing a payment card image included in the payment information, and dividing the payment card image into a first region comprising sensitive data that needs security and a second region comprising general data other than the sensitive data;
differently setting the plurality of encryption units corresponding to the first region and the second region so that the first region and the second region can be differentially subjected to encryption; and
dividing the payment card image into a plurality of encryption units, and performing the encryption with regard to the plurality of encryption units independently of each other.

11. The method according to claim 10, wherein
the plurality of encryption units comprises a first encryption unit corresponding to the first region and a second encryption unit corresponding to the second region, and
the method comprises setting the first encryption unit and the second encryption unit to be different in at least one of size and number from each other.

12. The method according to claim 11, wherein the size of the first encryption unit is set to be smaller than the size of the second encryption unit.

13. The method according to claim 11, wherein the number of first encryption units is set to be greater than the number of second encryption units.

14. The method according to claim 10, further comprising:
analyzing the payment information and dividing the payment information into first text data corresponding to the sensitive data and second text data corresponding to the general data when the payment information does not include the payment card image,
dividing payment information into the plurality of encryption units, and performing encryption with regard to the plurality of encryption units independently of each other, and
differently setting the plurality of encryption units corresponding to the first text data and the second text data so that the first text data and the second text data can be differentially subjected to the encryption.

15. The method according to claim 14, further comprising:
generating a plurality of pieces of dummy data, which has a same pattern as a pattern of the first text data but is different from the first text data, based on the first text data; and
storing the plurality of pieces of dummy data in a memory area assigned to store intermediate data generated by software or a platform while the first text data is processed.

16. The method according to claim 15, further comprising randomly storing the intermediate data and the plurality of pieces of dummy data not to match each other.

17. The method according to claim 15, wherein the intermediate data comprises data intactly stored as unchanged while being stored in the memory area.

18. The method according to claim 15, further comprising driving the software or the platform to process the first text data, and deleting the intermediate data stored in the memory area when the software or the platform is terminated.

19. A computer-readable recording medium recorded with a program for carrying out a method of controlling a payment apparatus, the method comprising:
receiving payment information based on Table Pay;
analyzing a payment card image included in the payment information, and dividing the payment card image into a first region comprising sensitive data that needs security and a second region comprising general data other than the sensitive data; and
dividing the payment card image into a plurality of encryption units, and performing encryption with regard to the plurality of encryption units independently of each other,
wherein the plurality of encryption units are differently set corresponding to the first region and the second region so that the first region and the second region can be differentially subjected to the encryption.
